# DEMANDE DE BREVET EUROPEEN

(11) **EP 3 597 086 A1**
(43) Date de publication de la demande: **22.01.2020**
(21) Numéro de dépôt: 19185608.7
(22) Date de dépôt: 10.07.2019
(51) Int. Cl.: A47J 37/06, A47J 37/12

(54) **APPAREIL DE CUISSON DU TYPE FRITEUSE À AIR CHAUD AVEC ACCESSOIRES DE CUISSON POUR DIVERSES PRÉPARATIONS ALIMENTAIRES**

(30) Priorité: 16.07.2018 FR 1856562
(71) Demandeur: SEB S.A., 69130 Ecully (FR)
(72) Inventeur: CORNU, Jérémy, 69007 LYON (FR); PRIETO, Guillaume, 21380 MARSANNAY LE BOIS (FR); SEURAT, Frédéric, 21490 BRETIGNY (FR)
(74) Mandataire: Soares, Luis Filipe

(57) **Abrégé**

L'invention concerne appareil de cuisson du type friteuse à air chaud, lequel comprend un corps principal, une cuve (1) munie d'un premier contenant (4), un panier (2) amovible de la cuve et muni d'un deuxième contenant (9) et un système de manipulation (3) configuré pour manipuler au moins le panier et permettre son positionnement dans la cuve, le deuxième contenant (9) étant intégré dans le premier contenant (4) lors du positionnement du panier dans la cuve, caractérisé en ce que le deuxième contenant (9) est muni de moyens d'appui et en ce que ledit appareil de cuisson comprend au moins un accessoire (100) pour préparation alimentaire qui comporte des moyens de support configurés pour reposer sur les moyens d'appui, lesdits moyens de support et lesdits moyens d'appui étant agencés l'un par rapport à l'autre pour assurer un décrochement vers le bas dudit au moins un accessoire à l'intérieur du deuxième contenant, de sorte que ledit au moins un accessoire avec la préparation alimentaire soient situés à un niveau inférieur à un bord supérieur (8) du premier contenant (4). Cet accessoire peut être conçu pour la préparation de verrines, de snacking, de grillade, de gâteaux et/ou de brochettes.

## Description

### Domaine technique

La présente invention concerne un appareil de cuisson du type friteuse à air chaud. L'invention vise en particulier à accessoiriser ledit appareil pour permettre la préparation de diverses recettes au moyen de divers modes de cuisson, par exemple la préparation de verrines chaudes, de brochettes, des plats de type snacking, des gâteaux, etc.

### Etat de la technique

Les appareils de cuisson du type friteuse à air chaud sont connus de l'homme du métier. De tels appareils permettent de réduire fortement la quantité de matière grasse, voire de la supprimer complètement, pendant la cuisson des aliments qui peuvent être d'origine végétale ou animale, par exemple des frites, des légumes, de la viande ou du poisson. En effet, la cuisson s'effectue avec peu ou pas d'huile grâce à de l'air chaud circulant dans une chambre de cuisson, ce qui permet de consommer des aliments plus diététiques, croustillants à l'extérieur et moelleux à l'intérieur. Etant donné la réduction ou la suppression de l'huile pour la cuisson, ces appareils dégagent moins d'odeurs et de graisses ; leur nettoyage est en outre simplifié.

Un appareil de cuisson du type friteuse à air chaud comprend généralement une cuve qui reçoit un panier dans lequel sont disposés des aliments à cuire. Une fois les aliments disposés dans le panier et celui-ci positionné dans la cuve, l'appareil de cuisson peut être fermé pour former une chambre de cuisson incorporant la cuve, le panier et les aliments. De l'air chaud est ensuite pulsé dans cette chambre au moyen d'un système de soufflage d'air chaud présent sur ledit appareil, la circulation de l'air chaud assurant ainsi la cuisson des aliments. Une poignée de manipulation est fixée au panier afin de pouvoir extraire celui-ci de la cuve sans se brûler et retirer les aliments en fin de cuisson.

Certains appareils de cuisson du type friteuse à air chaud comprennent des accessoires complémentaires permettant d'étendre les fonctions de ces appareils. En effet, la cuisson se faisant au moyen de l'air chaud soufflé dans la chambre, il est possible d'envisager l'utilisation de ces appareils pour d'autres préparations culinaires Par exemple, la friteuse à air chaud de la marque ACTIFRY®, développée par la demanderesse, prévoit un accessoire pour la préparation de verrines chaudes et un accessoire pour la préparation de snackings. L'accessoire pour la préparation de verrines chaudes comprend quatre verrines et un support comportant quatre zones de réception de ces quatre verrines. Cet accessoire pour la préparation de verrines chaudes est placé dans la cuve de la friteuse à air chaud en lieu et place du panier qui est habituellement disposé dans cette cuve pour recevoir les aliments à cuire. De même, l'accessoire pour la préparation de snacking peut comprendre une grille placée soit en lieu et place du panier habituellement disposé dans la cuve, soit au-dessus du panier.

### Résumé de l'invention

La présente invention met en oeuvre un appareil de cuisson du type friteuse à air chaud qui comporte au moins un accessoire de cuisson, la conception dudit appareil facilitant la manipulation de l'accessoire de cuisson en toute sécurité, sans risque de se brûler. Un autre but de la présente invention est de permettre la mise en oeuvre d'une gamme étoffée d'accessoires de cuisson, chaque accessoire de cuisson pouvant être placé dans la cuve et manipulé très aisément et en toute sécurité. Dans la suite de la description, le terme accessoire est employé pour définir l'accessoire de cuisson.

Selon l'invention, l'appareil de cuisson du type friteuse à air chaud comprend un corps principal, une cuve amovible du corps principal et munie d'un premier contenant, un panier amovible de la cuve et muni d'un deuxième contenant.

L'appareil de cuisson comprend aussi un système de manipulation configuré pour manipuler au moins le panier et permettre son positionnement dans la cuve, la cuve avec le panier étant manipulés vis-à-vis du corps principal à la manière d'un tiroir, le deuxième contenant étant intégré dans le premier contenant lors du positionnement du panier dans la cuve de sorte à ne pas dépasser de celui-ci.

Bien entendu, l'appareil de cuisson selon l'invention comprend d'autres caractéristiques semblables aux appareils de cuisson traditionnels, notamment une chambre de cuisson constituée lors de la fermeture de l'appareil, ladite chambre de cuisson intégrant la cuve avec le panier une fois ledit appareil fermé. L'appareil de cuisson comprend aussi un système de soufflage d'air chaud incorporé dans ledit appareil et permettant de pulser de l'air chaud dans la chambre de cuisson. L'air chaud pulsé circule dans la chambre de cuisson et dans la cuve qui contient le panier, assurant ainsi la cuisson d'une préparation alimentaire placée dans ce panier.

De manière remarquable, le deuxième contenant est muni de moyens d'appui et l'appareil de cuisson comprend au moins un accessoire pour préparation alimentaire qui comporte des moyens de support configurés pour reposer sur les moyens d'appui. En outre, les moyens de support et les moyens d'appui sont agencés l'un par rapport à l'autre pour assurer un décrochement vers le bas dudit au moins un accessoire à l'intérieur du deuxième contenant, de sorte que ledit au moins un accessoire avec la préparation alimentaire soient situés à un niveau inférieur à un bord supérieur du premier contenant, l'appareil de cuisson étant caractérisé en ce que le deuxième contenant comprend un contour, les moyens d'appui étant constitués d'un épaulement interne agencé sur ledit contour, ou en ce que le deuxième contenant comprend un bord supérieur, les moyens d'appui étant constitués dudit bord supérieur, le système de manipulation permettant une manipulation de la cuve avec le panier placé dans ladite cuve pour leur insertion dans le corps principal ou leur retrait dudit corps principal, ledit panier recevant ou non ledit au moins un accessoire.

On entend par épaulement un changement de dimension d'une même pièce, ici le contour ou le bord supérieur du deuxième contenant. Ainsi, les moyens d'appui et le deuxième contenant sont issus d'une même pièce. Les moyens d'appui ne sont donc pas formés par des pièces apposées sur le contour ou le bord supérieur du deuxième contenant.

Le décrochement vers le bas de l'accessoire à l'intérieur du deuxième contenant peut être partiel ou total, selon les multiples réalisations envisageables, le tout étant de conserver l'accessoire avec la préparation alimentaire, reposant sur le deuxième contenant du panier, à un niveau inférieur au bord supérieur du premier contenant de la cuve.

Cette mise en oeuvre permet avantageusement de rapporter l'au moins un accessoire sur le panier et de manipuler aisément le panier incorporant l'au moins un accessoire pour sortir l'ensemble de la cuve sans se brûler, en fin de cuisson. La manipulation du panier incorporant ledit accessoire est également aisée lors de la mise en place dans la cuve.

Cette mise en oeuvre offre également la possibilité d'utiliser une grande diversité d'accessoires, dès l'instant où ceux-ci incorporent lesdits moyens de support qui coopèrent avec un bord intérieur sur le panier.

En outre, cette mise en oeuvre garantit que l'accessoire avec la préparation alimentaire sont convenablement intégrés dans le volume de la cuve, comme le panier, de sorte à assurer une fermeture convenable de l'appareil de cuisson pour la constitution de la chambre de cuisson. Cela est tout particulièrement avantageux pour les appareils de cuisson à tiroir, comme cela apparaîtra ci-après, bien qu'il soit aussi possible de l'envisager sur les appareils de cuisson à couvercle.

Selon une réalisation de l'appareil de cuisson, les moyens de support et les moyens d'appui sont agencés l'un par rapport à l'autre pour assurer un décrochement vers le bas de l'au moins un accessoire à l'intérieur du deuxième contenant, de sorte que ledit au moins un accessoire avec la préparation alimentaire soient non seulement situés à un niveau inférieur au bord supérieur du premier contenant, mais aussi situés à un niveau inférieur à un bord supérieur du deuxième contenant. Cette mise en oeuvre permet d'avoir un panier avec le bord supérieur du deuxième contenant qui est légèrement inférieur, voire à la même hauteur que le bord supérieur du premier contenant lorsque le panier est inséré dans la cuve. Ainsi, on optimise le volume du deuxième contenant de sorte à mettre une quantité plus importante d'aliments à cuire dans le panier, l'accessoire n'étant pas utilisé dans ce cas.

L'invention reste applicable aux appareils de cuisson du type friteuse à air chaud avec une cuve fixe agencée à l'intérieur du corps et recevant de manière amovible le panier, avec ou sans l'accessoire placé dans ce panier, sans sortir du cadre de l'invention.

La cuve et le panier sont insérés dans un logement sur le corps de l'appareil ou retiré de celui-ci par un mouvement de translation ou de coulissement, en tirant ou en poussant sur le système de manipulation. L'insertion de la cuve et du panier dans le logement du corps, à la manière d'un tiroir, permet la fermeture de l'appareil et la constitution de la chambre de cuisson, intégrant ladite cuve et le panier. On comprend que dans une telle configuration du type appareil de cuisson à tiroir, il est primordial que non seulement le contenant du panier mais aussi l'accessoire avec la préparation alimentaire soient convenablement intégrés dans le volume du contenant de la cuve, afin d'assurer une fermeture convenable du tiroir.

Selon une réalisation de l'appareil de cuisson objet de l'invention, l'au moins un accessoire est un accessoire de réchauffage. Cet accessoire comprend au moins un récipient et un support de l'au moins un récipient. En outre, le support est configuré pour prendre appui sur un épaulement interne ou un bord supérieur du deuxième contenant en assurant ledit décrochement vers le bas à l'intérieur du deuxième contenant. En complément, le support peut comprendre un système de stabilisation permettant de le maintenir stable une fois sorti du panier et posé sur un plan, par exemple une table ou un plan de cuisine, afin d'avoir les mains libres durant le retrait de l'au moins un récipient dudit support.

Selon une première réalisation, l'accessoire de réchauffage est conçu pour la préparation de verrines chaudes ; dans ce cas le récipient est une verrine. De préférence, cet accessoire comprend quatre ou cinq verrines, le support comprenant respectivement quatre ou cinq zones de réception des verrines. On peut envisager d'autres réalisations avec deux ou trois verrines, voire avec plus de cinq verrines, et autant de zones de réception des verrines sur le support.

Selon une deuxième réalisation, l'accessoire de réchauffage est conçu pour réchauffer des plats plus consistants ; dans ce cas le récipient est un bac ou un bol. De préférence, cet accessoire comprend un bac ou un bol, le support comprenant respectivement au moins une zone de réception du bac ou du bol. On pourrait envisager d'autres réalisations, par exemple avec deux bacs ou deux bols et deux zones de réceptions des bacs ou des bols sur le support.

Selon une réalisation, l'au moins un accessoire est conçu pour la préparation de plats du type snacking, cet accessoire étant constitué d'une grille munie d'un contour. Selon une autre réalisation, l'au moins un accessoire est conçu pour la préparation de plats du type grillade, cet accessoire étant constitué d'une plaque, au lieu d'une grille. Selon une autre réalisation, l'au moins un accessoire est conçu pour la préparation de gâteaux, cet accessoire étant constitué d'un moule à gâteau, au lieu d'une plaque ou d'une grille. Bien entendu, on peut prévoir que l'appareil de cuisson comprenne l'un et ou l'autre de ces trois accessoires. Dans ces trois cas, la grille, la plaque et le moule à gâteau sont munis chacun d'un contour configuré pour prendre appui sur un épaulement interne ou un bord supérieur du deuxième contenant en assurant ledit décrochement vers le bas à l'intérieur du deuxième contenant.

Selon une autre réalisation, l'au moins un accessoire comprend un support filaire formant un bord périphérique qui est configuré pour prendre appui sur un épaulement interne ou un bord supérieur du deuxième contenant en assurant ledit décrochement vers le bas à l'intérieur du deuxième contenant. Ce support filaire permet la réception d'un ou plusieurs ustensiles complémentaires. En complément, le support filaire peut comprendre un système de stabilisation permettant de le maintenir stable une fois sorti du panier et posé sur un plan, par exemple une table ou un plan de cuisine, afin d'avoir les mains libres durant le retrait du ou des ustensiles complémentaires.

Selon une mise en oeuvre d'un premier ustensile complémentaire, l'accessoire comprend au moins un pic, le support filaire comprenant au moins une paire de cavités sur laquelle prend appui le pic. De préférence, l'accessoire comprend quatre à huit pics, de préférence six pics, et quatre à huit paires de cavités, de préférence six paires de cavités, chaque pic prenant appui sur une paire de cavités. Ainsi, l'accessoire permet la préparation de brochettes.

Selon une mise en oeuvre de seconds ustensiles complémentaires, l'accessoire comprend une grille et/ou une plaque et/ou un moule à gâteau. La grille, la plaque et/ou le moule à gâteau sont configurés pour prendre appui sur le bord périphérique du support filaire. Ainsi, l'accessoire permet la préparation de plats de type snacking et grillade lorsque l'ustensile complémentaire utilisé est la grille ou la plaque et l'accessoire permet la préparation de gâteaux lorsque l'ustensile complémentaire utilisé est le moule à gâteau. Selon cette mise en oeuvre, la grille, la plaque et/ou le moule à gâteau comprennent chacun un contour muni d'un rebord, le contour s'engageant dans le support filaire jusqu'à ce que le rebord vienne en butée contre le bord périphérique.

L'invention a également pour objet un procédé de fabrication du deuxième contenant tel que décrit précédemment dans lequel les moyens d'appui sont formés au cours d'une même étape de fabrication du contour ou du bord supérieur du deuxième contenant.
Selon une mise en oeuvre du procédé, les moyens d'appui agencés sur le contour ou le bord supérieur du deuxième contenant sont formés par emboutissage.

### Brève description des figures

La description ci-après met en évidence les caractéristiques et avantages de la présente invention. Cette description s'appuie sur des figures, parmi lesquelles :
- Les figures 1 à 3 illustrent respectivement un panier placé dans une cuve, le panier seul et la cuve seule ;
- Les figures 4 à 6 illustrent respectivement un accessoire de préparation de verrines, le support de verrines seul et une verrine seule ;
- La figure 7 illustre un support filaire d'un autre accessoire, ledit support filaire étant conçu pour la réception d'ustensiles complémentaires
- Les figures 8 et 9 illustrent un ustensile complémentaire du type grille conçu pour être réceptionné par le support filaire de la figure 7 ;
- Les figures 10 et 11 illustrent un autre ustensile complémentaire du type pic conçu pour être supporté par le support filaire de la figure 7 ;
- La figure 12 illustre un autre ustensile du type moule à gâteau conçu pour être réceptionné par le support filaire de la figure 7.

### Description détaillée

Dans la description suivante, les mêmes références sont utilisées pour décrire les caractéristiques identiques ou similaires selon les diverses variantes de conception de l'appareil de cuisson du type friteuse à air chaud.

Dans la suite de la description, sans indication contraire, le terme appareil désigne l'appareil de cuisson du type friteuse à air chaud, selon l'invention. De même, le terme accessoire désigne l'accessoire de cuisson.

Dans la suite de la description, les termes « horizontal », « vertical », « inférieur », « supérieur », « longitudinal », « transversal », « haut », « bas », « avant » et « arrière » qui pourraient être employés, le seront en considération de la position de l'appareil reposant sur un plan de travail, en situation d'usage.

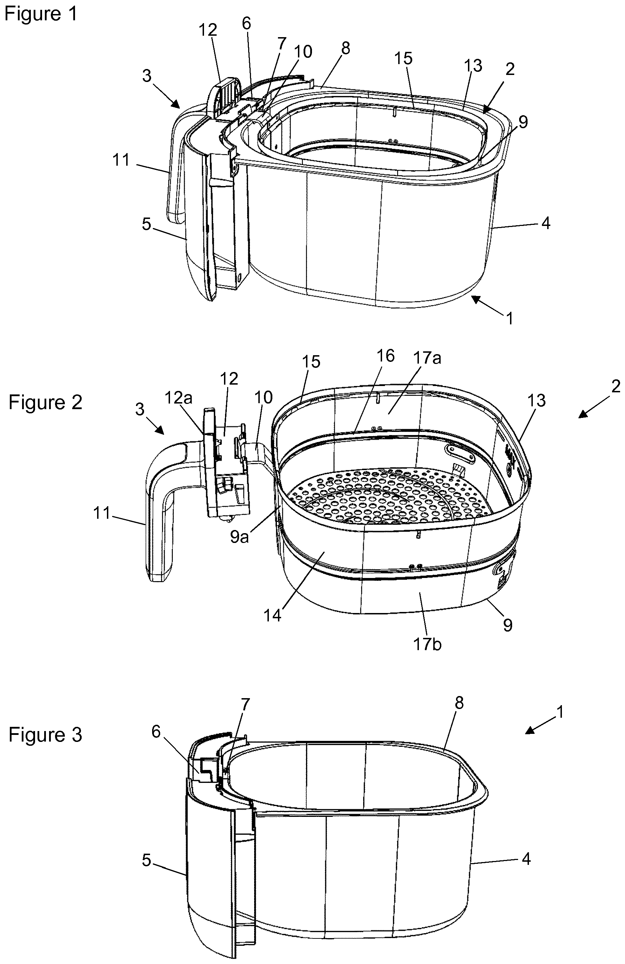

La description suivante et les figures 1 à 12 s'attachent à mettre en évidence les caractéristiques essentielles de l'invention qui portent sur divers accessoires qui peuvent être insérés dans le panier de l'appareil et supportés par ledit panier. Les autres caractéristiques de l'appareil (système de soufflage d'air chaud ; corps avec chambre de cuisson dans laquelle sont insérés la cuve et le panier ...) déjà connues des appareils de cuisson traditionnels ne sont pas détaillées ci-après ; l'homme du métier pourra se référer aux friteuses à air chaud existant déjà sur le marché.

Comme le montrent les figures 1 à 3, l'appareil de cuisson comprend une cuve 1 dans laquelle peut être positionné un panier 2. La manipulation du panier 2 s'effectue grâce à un système de manipulation 3 qui, outre le fait de permettre une manipulation du panier 2 seul pour le placer dans la cuve 1 ou le retirer de ladite cuve 1, permet de fixer ledit panier 2 en position dans ladite cuve 1 de sorte à manipuler concomitamment la cuve 1 avec le panier 2 lors de son insertion dans le corps principal (non illustré) de l'appareil de cuisson et lors de son retrait dudit corps principal, à la manière d'un tiroir. Une telle conception d'appareil, du type tiroir, est connue de l'homme du métier, raison pour laquelle elle n'est pas détaillée.

Comme l'illustrent les figures 1 et 3, la cuve 1 comprend un premier contenant 4, une façade 5, une zone de réception 6 et une encoche 7 agencée sur un bord supérieur 8 du premier contenant 4.

Comme l'illustrent les figures 1 et 2, le panier 2 comprend un deuxième contenant 9 et une patte de support 10 fixée sur le côté avant 9a dudit deuxième contenant 9. Le système de manipulation 3 comprend une poignée de manipulation 11 et un corps 12 formés d'une seule et même pièce, la poignée de manipulation 11 étant fixée à la face avant 12a du corps 12.

Lorsque le panier 2 est placé dans la cuve 1, le corps 12 est logé dans la zone de réception 6 et la patte de support 10 vient en appui contre l'encoche 7 agencée sur le bord supérieur 8 du premier contenant 4 de la cuve 1. La patte de support 10 est logée dans l'encoche 7 pour ne pas dépasser du bord supérieur 8. En outre, le deuxième contenant 9 est entièrement logé dans le premier contenant 4, le bord supérieur 13 du deuxième contenant 9 étant positionné à une hauteur inférieure ou égale à la position du bord supérieur 8 du premier contenant 4. Cela permet de garantir une fermeture convenable de l'appareil lorsque la cuve 1 avec le panier 2 disposé dans celle-ci sont insérés d'avant en arrière dans un logement sur le corps principal de l'appareil, à la manière d'un tiroir ; ainsi, la fermeture du tiroir s'effectue convenablement, sans risque que le deuxième contenant 9 et/ou la patte de support 10 viennent en butée contre la face avant du corps principal (non illustrée) par laquelle sont insérés la cuve 1 et le panier 2 dans le logement.

L'appareil comprend également un ou plusieurs accessoires 100 dont certaines réalisations vont être décrites ci-après. Ces accessoires 100 permettront la réalisation de diverses préparations alimentaires ; pour cela lesdits accessoires 100 seront positionnés l'un ou l'autre dans le deuxième contenant 9 du panier 2 et supportés par celui-ci. Il est donc important que ces accessoires avec leurs préparations alimentaires soient intégralement logés dans le premier contenant 4 de la cuve 1, sans dépasser du bord supérieur 8 dudit premier contenant 4, afin de s'assurer de pouvoir fermer correctement l'appareil lors de l'insertion de la cuve 1 avec le panier 2 contenant l'accessoire 100, à la manière d'un tiroir. Pour cela, tel qu'illustré sur les figures 1 et 2, le deuxième contenant 9 du panier 2 comporte sur son contour 14 un épaulement interne 15 constituant des moyens d'appui destinés à supporter l'accessoire 100. Le contour 14 est délimité en partie supérieure par le bord supérieur 13. Sur les figures 1 et 2, l'épaulement interne 15 est positionné à proximité du bord supérieur 13, mais on pourrait envisager de mettre en oeuvre cet épaulement interne 15 à une position plus éloignée vers le bas vis-à-vis du bord supérieur 13, par exemple à une hauteur correspondant au bossage 16 agencé à mi-hauteur sur le contour 14. Cet épaulement interne 15 peut être agencé sur toute la périphérie du contour 14, comme sur les figures 1 et 2 ; on pourrait aussi agencer cet épaulement interne 15 que sur deux faces 17a, 17b en vis-à-vis sur ledit contour 14, voire d'autres variantes. En variante, on pourrait prévoir que les moyens d'appui soient constitués par le bord supérieur 13 du deuxième contenant 9 du panier 2, en remplacement de l'épaulement interne 15.

L'homme du métier comprendra que la configuration des moyens d'appui (l'épaulement interne 15 ou le bord supérieur 13) sera liée tout particulièrement au choix de la configuration de moyens de support sur l'accessoire 100, lesquels reposeront sur les moyens d'appui en s'assurant que ledit accessoire 100 avec la préparation alimentaire ne dépasseront pas du bord supérieur 8 du premier contenant 4 de la cuve 1. De préférence, la configuration des moyens d'appui (l'épaulement interne 15 ou le bord supérieur 13) et celle des moyens de support sur l'accessoire 100 permettront de s'assurer que ledit accessoire 100 avec la préparation alimentaire ne dépassent pas du bord supérieur 13 sur le deuxième contenant 9 du panier 2, afin de conserver un volume maximal dudit deuxième contenant 9 avec son bord supérieur 13 attenant ou confondu avec le bord supérieur 8 du premier contenant 4 de la cuve. Ainsi, l'homme du métier comprendra que de multiples mises en oeuvre sont envisageables dans le cadre de l'invention.

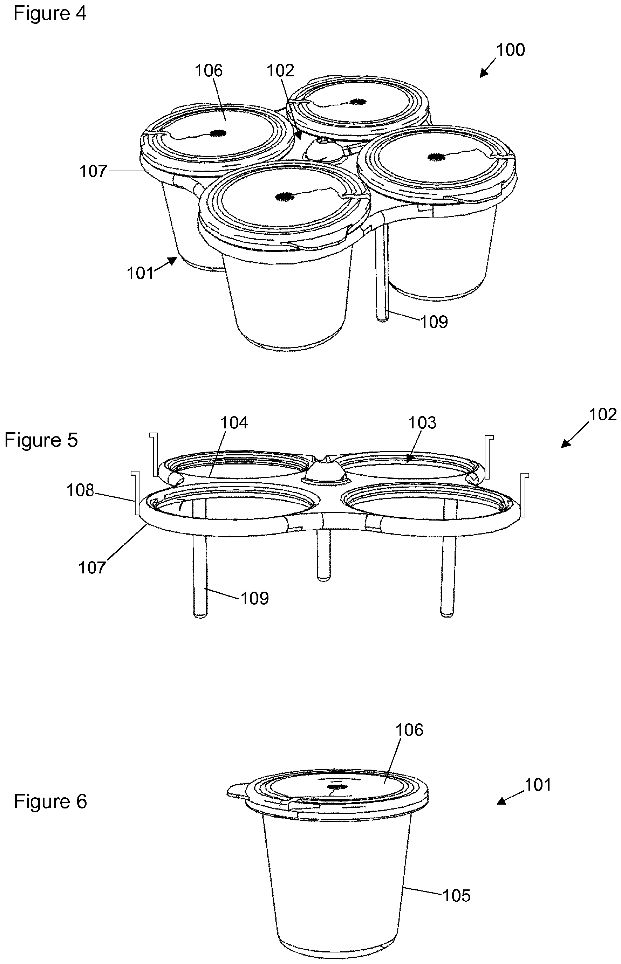

Sur les figures 4 à 6, l'accessoire 100 est un accessoire pour la préparation de verrines 101. L'accessoire 100 comprend quatre verrines 101 et un support 102 qui comporte quatre zones de réception 103 de ces verrines 101, comme illustré en figure 5. Ces zones de réception 103 sont formées par des ouvertures 104 sur le support 102 dans lesquelles viennent se loger les verrines 101. La forme des ouvertures 104 est adaptée à la forme de verrines 101. Sur les figures 4 à 7, ces formes sont circulaires mais on pourrait prévoir des formes carrées, par exemple. Chaque verrine 101 comprend un récipient 105 fermé par un couvercle 106 ; lorsque la verrine 101 est placée dans une zone de réception 103, le couvercle 106 est positionné juste au-dessus du support 102, comme le montre la figure 4. Le support 102 prend appui sur l'épaulement interne 15 du deuxième contenant 9 du panier 2 en s'assurant que les couvercles 106 ne dépassent pas du bord supérieur 8 sur la cuve 1, de préférence ne dépassent pas du bord supérieur 13 sur le panier 2. Pour cela, plusieurs mises en oeuvre sont envisageables :
Le bord périphérique 107 du support 102 peut être configuré pour venir reposer directement sur l'épaulement interne 15 sur le panier 2. Dans ce cas, l'épaulement interne 15 sera suffisamment éloigné vers le bas du bord supérieur 13 pour pouvoir intégrer complètement l'accessoire 100 avec la préparation alimentaire dans le premier contenant 4 de la cuve 1, de préférence dans le deuxième contenant 9 du panier 2.

On peut aussi, en variante, laisser l'épaulement interne 15 à proximité du bord supérieur 13, comme sur les figures 1 et 2, et prévoir un bord périphérique 107 qui comporte un décrochement vers le bas, ce décrochement étant par exemple mis en oeuvre lors du moulage du support 102 lorsqu'il s'agit d'une pièce moulée, voire par emboutissage lorsque le support 102 est une pièce emboutie.

On peut également, selon une autre variante, prévoir des pattes de maintien 108 sur le bord périphérique 107 du support 102, comme schématisées sur la figure 5, ces pattes de maintien 108 ayant une forme crochetée pour venir s'agripper sur l'épaulement interne 15 du panier 2. Dans ce cas, l'épaulement interne 15 peut demeurer à proximité du bord supérieur 13 sur le panier; il suffira de prévoir des pattes de maintien 108 d'une longueur suffisante pour garantir que les couvercles 106 des verrines 101 restent positionnés en-dessous du bord supérieur 8 sur la cuve 1, de préférence en-dessous du bord supérieur 13 sur le panier 2. Sur la figure 5, quatre pattes de maintien 108 sont schématisées ; leur nombre, leur disposition et leur forme sur le bord périphérique 107 du support 102 ne sont pas limitatifs, d'autres variantes restant envisageables dans le cadre de l'invention.

Tel qu'illustré en regard des figures 4 et 5, le support 102 peut comporter des pieds 109 qui s'étendent vers le bas de manière à être positionnés plus bas que chaque verrine 101 positionnée sur ce support 102. Ces pieds 109 permettront de stabiliser le support 102 sur un plan de cuisine ou sur une table, une fois l'accessoire 100 retiré du panier 2.

D'autres accessoires de réchauffage sont envisageables, au même titre que l'accessoire 100 pour la préparation de verrines 101 décrit précédemment. Dans ce cas le récipient 105 de la verrine 101 est remplacé par un bac ou un bol de dimension plus importante, avec ou sans couvercle. De préférence un ou deux bacs ou bols seront prévus sur cet accessoire de réchauffage. Le support 102 sera adapté en conséquence pour ne comporter qu'une seule ou deux ouvertures 104 constituant chacune une zone de réception 103 adaptée audit bac ou bol. Ainsi le volume du bac ou bol permet le réchauffage de plats consistants.

L'appareil peut comprendre d'autres accessoires 100, en substitution ou en complément de ceux décrits précédemment.

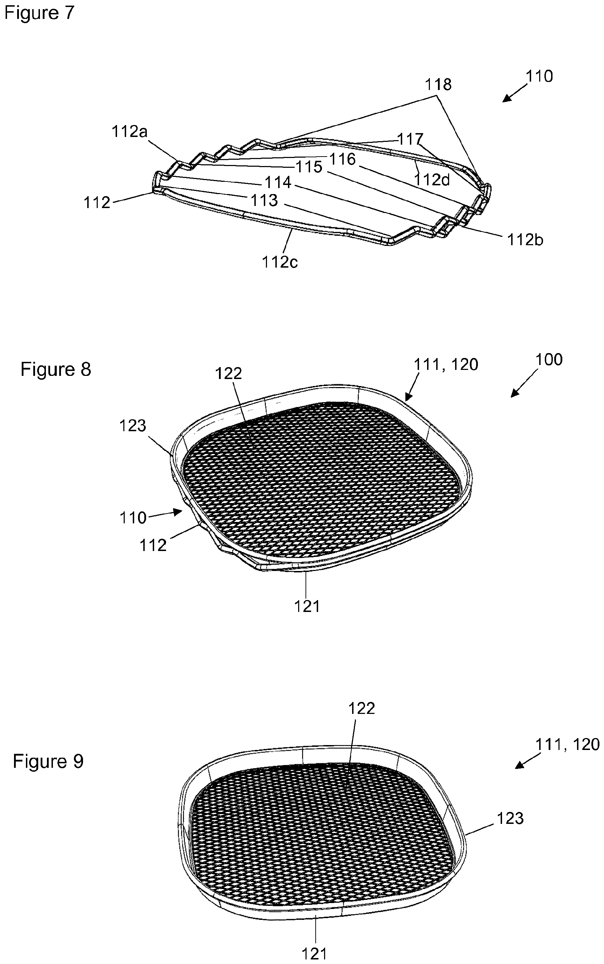

A titre d'exemple, en regard des figures 7 à 12, l'accessoire 100 comprend un support filaire 110 permettant la réception de divers ustensiles 111 complémentaires. Ce support filaire forme un bord périphérique 112 qui peut soit être configuré pour venir en appui sur l'épaulement interne 15 du panier 2, soit comporter des pattes de maintien (non illustrées) similaires aux pattes de maintien 108 sur le support 102, ledit épaulement interne 15 étant adapté en conséquence sur le contour 14 du panier 2, afin de garantir l'intégration de l'accessoire 100 dans la cuve 1, de préférence dans le panier 2, comme précédemment.

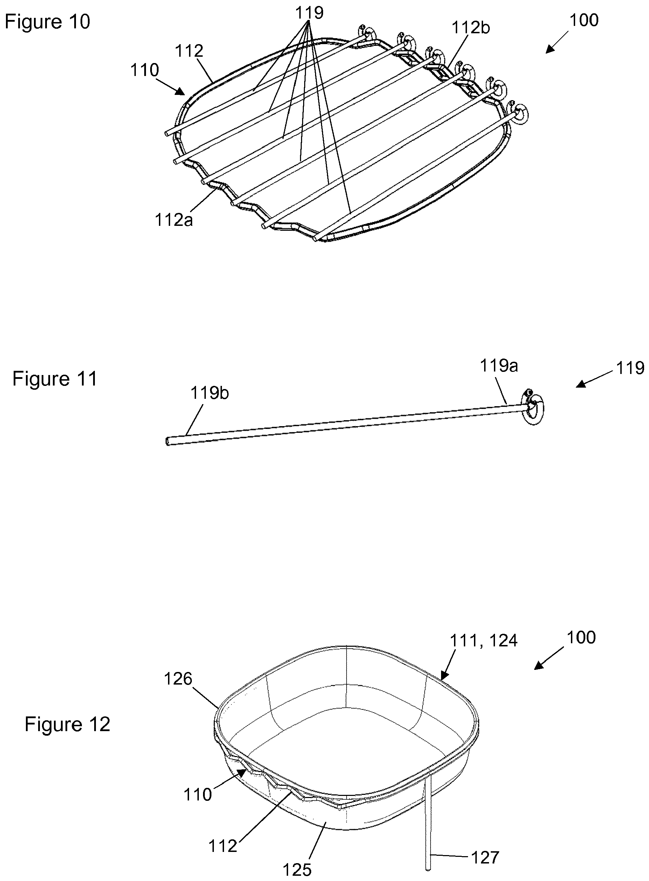

Sur deux premiers côtés opposés 112a, 112b du bord périphérique 112 sont agencées six paires de cavités 113 à 118, chaque paire de cavités 113 à 118 permettant la réception d'un pic 119, les deux extrémités 119a, 119b du pic 119 prenant appui sur une des paires de cavités 113 à 118, comme illustré en regard des figures 10 et 11. Ainsi, l'accessoire 100 permet la préparation de brochettes. Le nombre de paires de cavités sur le bord périphérique 112 et le nombre de pics 119 peuvent varier, de préférence entre quatre et huit, selon les dimensions de la cuve 1 et du panier 2 de l'appareil. Deux seconds côtés opposés 112c, 112d du bord périphérique 112 prennent appui sur l'épaulement interne 15 du panier 2 ; les seconds côtés opposés 112c, 112d et l'épaulement interne 15 sont agencés pour assurer le décrochement vers le bas dudit support filaire 110 supportant les pics 119, en-dessous du bord supérieur 8 sur la cuve 1, de préférence en-dessous du bord supérieur 13 sur le panier 2.

Comme illustré aux figures 8 et 9, cet accessoire 100 peut comprendre, en complément ou en substitution des pics 119, une grille 120 munie d'un contour 121 et d'un fond grillagé 122. Le fond grillagé 122 peut être fixe ou amovible vis-à-vis du contour 121, notamment pour faciliter son nettoyage. Un rebord périphérique 123 est formé en partie supérieure du contour 121 ; le contour 121 est dimensionné pour s'engager à l'intérieur du bord périphérique 112 du support filaire 110, tandis que le rebord périphérique 123 est dimensionné pour venir en butée contre ledit bord périphérique 112 de manière à maintenir la grille 120 sur le support filaire 110. Au moyen de cette grille 120, l'accessoire 100 permet la préparation de plat de type snacking.

Il est possible de prévoir, en complément ou en substitution des pics 119 et/ou de la grille 120, une plaque (non illustrée) de conception similaire à ladite grille 120, le fond de la plaque étant toutefois plein au lieu d'être grillagé. Cette plaque permet notamment la préparation de grillades.

Il est également possible de prévoir, en complément ou en substitution des pics 119, de la grille 120 et/ou de la plaque, un moule à gâteau 124, illustré en figure 12, dont la conception s'apparente à celle de ladite grille 120, c'est-à-dire avec un contour 125 et un rebord périphérique 126, le contour 125 du moule à gâteau 124 étant simplement plus haut que le contour 121 de la grille 120 afin de réceptionner convenablement la pâte à gâteau sans risque de déborder dudit moule.

Dans une variante d'un accessoire 100 ne prévoyant pas la réception de pics 119, mais simplement d'une grille 120, d'une plaque et/ou d'un moule à gâteau 124, le bord périphérique 112 du support filaire 110 pourra être conçu sans les paires de cavités 113 à 118.

Comme l'illustre la figure 12, le support filaire 110 peut comprendre en complément trois ou quatre pieds 127 (un seul illustré sur la figure 12) d'une conception similaire à celle des pieds 109 sur le support 102 illustré en figure 5, afin de stabiliser ledit support filaire 110 le temps du retrait des pics 119, de la grille 120, de la plaque ou du moule à gâteau 124.

D'autres accessoires 100 sont encore envisageables, dans le cadre de l'invention. On pourrait notamment prévoir un accessoire 100 constitué d'une grille 120, d'une plaque ou d'un moule à gâteau 124, tels que précités, mais sans ledit support filaire 110. Dans ce cas, le rebord périphérique 123 du contour 121 de la grille 120, le rebord périphérique du contour de la plaque (non illustrée) et le rebord périphérique 126 du contour 125 du moule à gâteau 124 seront agencés pour venir directement en appui sur l'épaulement interne 15 du panier 2, ledit épaulement interne 15 étant positionné à une hauteur déterminée sur le contour 14 pour assurer un décrochement de la grille 120, de la plaque ou du moule à gâteau 124 avec la préparation alimentaire qu'ils reçoivent, en-dessous du bord supérieur 8 sur la cuve 1, de préférence en-dessous du bord supérieur 13 sur le panier 2.

La description ci-dessus met en évidence l'objet de l'invention qui présente comme avantage particulier de permettre la mise en oeuvre d'une gamme d'accessoires 100 très variée sur un appareil du type à tiroir. Celle-ci n'a toutefois aucun caractère limitatif, des variantes pouvant être envisagées sans sortir du cadre de l'invention, avec des appareils à tiroir mais aussi avec des appareils à couvercles, la conception d'un tel appareil étant connue de l'homme du métier. A titre d'exemple, on pourrait prévoir un appareil qui comporte une cuve fixe ou amovible du corps principal de cet appareil et fermée par un couvercle pour constituer une chambre de cuisson dans laquelle est soufflé de l'air chaud, le panier 2 et l'accessoire 100 se positionnant dans la cuve. Selon ce type d'appareil avec couvercle, l'intégration de l'accessoire 100 et de la préparation alimentaire dans la cuve, de préférence dans le panier 2 qui se loge dans la cuve 1, permet avantageusement de limiter la profondeur du couvercle et, ainsi, l'encombrement de l'appareil.

Dans la description qui précède, les diverses réalisations de l'accessoire 100 reposent sur l'épaulement interne 15. Chaque accessoire 100 peut être adapté pour reposer sur le bord supérieur 13 du deuxième contenant 9 du panier, tout en conservant un positionnement de l'accessoire 100 avec la préparation alimentaire en-dessous du bord supérieur 8 du premier contenant 4 de la cuve 1.

On comprend, à la lecture de la description qui précède, que la coopération des moyens d'appui (épaulement interne 15, bord supérieur 13) sur le deuxième contenant 9 du panier 2 et des moyens de support (bord périphérique 107, 112, rebord périphérique 123, 126, pattes de maintien 108, ou autres) sur l'accessoire 100 permet d'assurer un décrochement vers le bas de l'accessoire 100, à l'intérieur du deuxième contenant 9 du panier 2, de sorte que l'accessoire 100 et la préparation alimentaire, que ledit accessoire 100 contient ou reçoit, ne dépassent pas du bord supérieur 8 sur le premier contenant 4 de la cuve 1, de préférence du bord supérieur 13 sur le deuxième contenant 9 du panier 2. On pourra donc jouer sur la conception desdits moyens d'appui et desdits moyens de support pour les adapter au mieux en fonction des différents accessoires 100 prévus sur l'appareil.

## Revendications

1. Appareil de cuisson du type friteuse à air chaud, lequel comprend un corps principal, une cuve (1) amovible du corps principal et munie d'un premier contenant (4), un panier (2) amovible de la cuve et muni d'un deuxième contenant (9) et un système de manipulation (3) configuré pour manipuler au moins le panier et permettre son positionnement dans la cuve, le deuxième contenant (9) étant intégré dans le premier contenant (4) lors du positionnement du panier dans la cuve, la cuve (1) avec le panier (2) étant manipulés vis-à-vis du corps principal à la manière d'un tiroir, le deuxième contenant (9) est muni de moyens d'appui et ledit appareil de cuisson comprend au moins un accessoire (100) pour préparation alimentaire qui comporte des moyens de support configurés pour reposer sur les moyens d'appui, lesdits moyens de support et lesdits moyens d'appui étant agencés l'un par rapport à l'autre pour assurer un décrochement vers le bas dudit au moins un accessoire à l'intérieur du deuxième contenant, de sorte que ledit au moins un accessoire avec la préparation alimentaire soient situés à un niveau inférieur à un bord supérieur (8) du premier contenant (4), **caractérisé en ce que** le deuxième contenant (9) comprend un contour (14), les moyens d'appui étant constitués d'un épaulement (15) interne agencé sur ledit contour (14), ou **en ce que** le deuxième contenant (9) comprend un bord supérieur (13), les moyens d'appui étant constitués dudit bord supérieur (13), le système de manipulation (3) permettant une manipulation de la cuve avec le panier (2) placé dans ladite cuve pour leur insertion dans le corps principal ou leur retrait dudit corps principal, ledit panier recevant ou non ledit au moins un accessoire (100).

2. Appareil de cuisson selon la revendication 1, dans lequel lesdits moyens de support et lesdits moyens d'appui sont agencés l'un par rapport à l'autre pour assurer un décrochement vers le bas dudit au moins un accessoire à l'intérieur du deuxième contenant, de sorte que ledit au moins un accessoire avec la préparation alimentaire soient situés à un niveau inférieur à un bord supérieur (13) du deuxième contenant (9).

3. Appareil de cuisson selon l'une quelconque des revendications 1 à 2, dans lequel l'au moins un accessoire (100) est un accessoire de réchauffage comprenant au moins un récipient et un support (102) de l'au moins un récipient, le support étant configuré pour prendre appui sur un épaulement interne (15) ou un bord supérieur (13) du deuxième contenant (9) en assurant ledit décrochement vers le bas à l'intérieur du deuxième contenant (9).

4. Appareil de cuisson selon la revendication 3, dans lequel le récipient est une verrine (101).

5. Appareil de cuisson selon la revendication 4, dans lequel l'accessoire (100) comprend quatre ou cinq verrines (101), le support (102) comprenant respectivement quatre ou cinq zones de réception (103) des verrines.

6. Appareil de cuisson selon la revendication 3, dans lequel l'accessoire (100) comprend au moins un bac, le support (102) comprenant respectivement au moins une zone de réception (103) du bac.

7. Appareil de cuisson selon l'une quelconque des revendications 3 à 6, dans lequel le support (102) comprend un système de stabilisation (108) permettant de le maintenir stable une fois sorti du panier (2) et posé sur un plan.

8. Appareil de cuisson selon l'une quelconque des revendications 1 à 2, dans lequel l'au moins un accessoire (100) comprend une grille (120), une plaque et/ou un moule à gâteau (124), la grille, la plaque et le moule à gâteau étant munis chacun d'un contour (121, 125) configuré pour prendre appui sur un épaulement interne (15) ou un bord supérieur (13) du deuxième contenant (9) en assurant ledit décrochement vers le bas à l'intérieur du deuxième contenant (9).

9. Appareil de cuisson selon l'une quelconque des revendications 1 à 2, dans lequel l'au moins un accessoire (100) comprend un support filaire (110) formant un bord périphérique (112) qui est configuré pour prendre appui sur un épaulement interne (15) ou un bord supérieur (13) du deuxième contenant (9) en assurant ledit décrochement vers le bas à l'intérieur du deuxième contenant (9).

10. Appareil de cuisson selon la revendication 9, dans lequel l'accessoire comprend au moins un pic (119), le support filaire (110) comprenant au moins une paire de cavités (113 à 118) sur laquelle prend appui le pic.

11. Appareil de cuisson selon la revendication 10, dans lequel l'accessoire (100) comprend quatre à huit pics (119), de préférence six pics, et quatre à huit paires de cavités (113 à 118), de préférence six paires de cavités, chaque pic prenant appui sur une paire de cavités.

12. Appareil de cuisson selon l'une quelconque des revendications 9 à 11, dans lequel l'accessoire (100) comprend une grille (120), une plaque et/ou un moule à gâteau (124), la grille, la plaque et/ou le moule à gâteau étant chacun configurés pour prendre appui sur le bord périphérique (112) du support filaire (110).

13. Appareil de cuisson selon la revendication 12, dans lequel la grille (120), la plaque et/ou le moule à gâteau (124) comprennent chacun un contour (121, 125) muni d'un rebord périphérique (123, 126), le contour s'engageant dans le support filaire (110) jusqu'à ce que le rebord vienne en butée contre le bord périphérique (112).

14. Appareil de cuisson selon l'une quelconque des revendications 9 à 13, dans lequel le support filaire (110) comprend un système de stabilisation (127) permettant de le maintenir stable une fois sorti de la cuve (1) et posé sur un plan.

15. Procédé de fabrication du deuxième contenant selon l'une des revendications 1 à 14, dans lequel les moyens d'appui sont formés au cours d'une même étape de fabrication du contour (14) ou du bord supérieur (13) du deuxième contenant (9).

16. Procédé selon la revendication 15, dans lequel les moyens d'appui agencés sur le contour (14) ou le bord supérieur (13) du deuxième contenant (9) sont formés par emboutissage.
